# EUROPÄISCHE PATENTSCHRIFT

(11) **EP 1 881 765 B1**
(45) Veröffentlichungstag und Bekanntmachung des Hinweises auf die Patenterteilung: **09.12.2009**
(21) Anmeldenummer: 06724666.0
(22) Anmeldetag: 29.04.2006
(51) Int. Cl.: A22C 13/00

(54) **TRANSPARENTE NAHRUNGSMITTELHÜLLE MIT TEXTILEM TRÄGERMATERIAL**
TRANSPARENT FOOD CASING WITH TEXTILE BACKING MATERIAL
ENVELOPPE POUR PRODUITS ALIMENTAIRES TRANSPARENTE ET DOTÉE D'UN SUPPORT TEXTILE

(30) Priorität: 06.05.2005 DE 102005020965
(43) Veröffentlichungstag der Anmeldung: 30.01.2008
(73) Patentinhaber: Kalle GmbH, 65203 Wiesbaden (DE)
(72) Erfinder: BORST, Ralf, 65439 Flörsheim (DE); FÖGLER, Jens, 65232 Taunusstein (DE); GORD, Herbert, 55218 Ingelheim (DE); SEELGEN, Michael, 65510 Idstein (DE); WOLF, Peter, 49179 Ostercappeln (DE)
(74) Vertreter: Plate, Jürgen
(86) Internationale Anmeldenummer: PCT/EP2006/004057
(87) Internationale Veröffentlichungsnummer: WO 2006/119880

(56) Entgegenhaltungen:
- EP-A- 0 635 211
- EP-A- 0 878 133
- US-A- 4 397 337
- US-A- 4 670 273
- US-A1- 2001 045 236

## Beschreibung

Die Erfindung betrifft eine Nahrungsmittelhülle mit einem textilen Trägermaterial, ein Verfahren zu dessen Herstellung sowie ihre Verwendung als künstliche Wursthülle.

Schlauchförmige Wursthüllen auf Basis von regenerierter Cellulose mit einer Innenverstärkung aus Faserpapier, insbesondere aus Hanffaserpapier, sind seit langem bekannt (s. G. Effenberger, Wursthüllen - Kunstdarm, Holzmann Buchverlag, Bad Wörishofen, 2. Aufl. [1991] S. 23/24). Diese allgemein als Cellulose-Faserdärme bezeichneten Hüllen werden in der Regel nach dem Viskose-Verfahren hergestellt. Dabei wird zunächst das Faserpapier zu einem Schlauch mit überlappenden Längsnähten geformt, der mit Hilfe einer Ringdüse von außen, von innen oder von beiden Seiten mit Viskose beaufschlagt wird. Die Viskose wird dann in einem Fällbad zu Cellulosehydrat regeneriert.

Cellulose-Faserdärme lassen sich auch nach dem neueren Aminoxid-Verfahren herstellen. Dabei wird die Cellulose in wasserhaltigen Aminoxid, vorzugsweise in N-Methyl-morpholin-N-oxid-Monohydrat, gelöst. Diese Lösung wird auf das zu einem Schlauch geformte Faserpapier aufgebracht. Die Fällung der Cellulose erfolgt dann in einem Bad, das eine verdünnte wäßrige Aminoxid-Lösung enthält. Auf diese Weise läßt sich, wie beim Viskose-Verfahren, eine nahtlose Hülle erhalten. Anders als beim Viskose-Verfahren wird die Cellulose beim Aminoxid-Verfahren nicht chemisch derivatisiert, sondern rein physikalisch gelöst. Nach dem Füllen mit Wurstbrät sind Cellulose-Faserdärme weitgehend transparent.

Es ist darüber hinaus bekannt, schlauchförmige Nahrungsmittelhüllen aus einem Flachmaterial durch entsprechendes Formen und Verbinden der Längskanten herzustellen. Das Verbinden kann beispielsweise durch Kleben, Siegeln oder Nähen erfolgen. Bei dem Flachmaterial handelt es sich meist um Textilmaterial, das auch beschichtet sein kann. Das Flachmaterial selbst kann durch Aufschneiden eines großkalibrigen Schlauchs in Längsrichtung und Zerteilen des aufgeschnittenen Schlauches in mehrere Bahnen vorbestimmter Breite hergestellt sein, Hüllen aus derartigem Flachmaterial weisen eine besonders gleichmäßige Dehnung über den gesamten Umfang auf.

Des weiteren sind acrylat-beschichtete, rauchdurchlässige Textildärme bekannt (DE-A 31 47 519). Das darin verwendete Textilmaterial kann ein verfestigtes Vlies, ein Spinnvlies oder ein Gewebe aus Naturfasern und/oder Kunstfasern sein. Erwähnt sind Fasern aus Baumwolle, Leinen, Wolle, Seide, Celluloseester, Regeneratcellulose, Polyester, Polyamid. Polyacrylnitril, Polypropylen und Polyvinylchlorid. Beschichtet ist das Trägermaterial mit einem Acrylat-Emulsionspolymerisat auf Basis von lipophilen Estern der (Meth)acrylsäure mit niederen Alkanolen, insbesondere von Butylacrylat. Aufgetragen wird die Beschichtung mit Hilfe von üblichen Beschichtungsvorrichtungen, wie Luftrakel, Walzenrakel oder Gummituchrakel. Anschließend wird die beschichtete Bahn zum Schlauch geformt und die Längsnaht sodann durch Kleben, Nähen oder Siegeln verschlossen, Bei entsprechender Wahl der Zusammensetzung der Acrylatbeschichtung ist der Textildarm wasserdampf- und gasdurchlässig sowie räucherbar, so daß er auch für Dauerwurst geeignet ist, Diese Textildärme haben eine angenehm anzufassende Oberflächenstruktur; sie sind jedoch nicht transparent, so daß der Verbraucher keinen direkten Eindruck von dem Wurstbrät bekommt.

In der US 4,397,337 ist ein Cellulose-Faserdarm beschrieben. Bei der Herstellung des Faserdarms wird eine Faserverstärkung eingesetzt, die auf einer Seite eine Beschichtung aus einem thermoplastischen Polymer, beispielsweise eine Schicht aus Hochdruck-Polyethylen, aufweist. Die Beschichtung kann auch Polypropylen, Ethylen/Vinylacetat-Copolymere, Ethylen/Acrylat-Capolymere, Polyurethane, Polyamide, styrol/Buta4ien-BlocKcopolymere enthalten. Zwischen der Beschichtung aus thermoplastischem Kunststoff kann noch eine haftvermitteinde Schicht angeordnet sein. Sie besteht allgemein aus einem im wesentliche wasserunlöslichen Harz, insbesondere einem kationischen hitzehärtbaren Harz. Als Beispiele für hitzehärtbare Harze sind Harn-stoff/Formaidehyd-Harze, Melamin/Formaldehyd-Harze und Phenol/- Formaldehyd-Harze offenbart, daneben auch Kondensationsprodukte von Polyamid-Polyaminen mit bifunktionellen Nalohydrinen. Die Faserverstärkung ist in sämtlichen Beispielen ein Hanffaserpapier, doch sind auch textile Verstärkungen, Vliese, Gewebe und Gestricke offenbart. Die Faserverstärkung wird anschließend zu einem Schlauch mit überlappenden Längskanten geformt, Dabei befindet sich die Schicht aus dem thermoplastischen Polymer auf der Innenseite, Die Längskanten werden dann durch Verschweißen des thermoplastischen Polymers miteinander verbunden. Auf der Außenseite der so fixierten schlauchförmigen Faserverstärkung wird anschließend Viskose aufgebracht, die in einem nachfolgenden Bad zu Cellulose regeneriert wird. Auf der Außenseite befindet sich kein thermoplastisches Polymer und auch keine haftungsvermittelnde Imprägnierung. Die Viskose wird auf die nicht imprägnierte Außenseite der Faserverstärkung aufgebracht.

In der US 4,670,273 ist ein Cellulose-Faserdarm beschrieben. Bei der Herstellung des Faserdarms wird Viskose auf eine oder beiden Seiten eines zu einem Schlauch geformten Faserpapier-Streifens aufgebracht. Eine Faserverstärkung aus Textilmaterial ist nicht offenbart.

Auch in EP 0 635 211 A1 (= US 2001/0045236 A1) ist ein Cellulose-Faserdarm offenbart. Als Faserverstärkung wird dabei insbesondere Hanffaserpapier eingesetzt, Es sind jedoch auch Verstärkungen aus "gewebten und nicht-gewebten" Fasern erwähnt. Zum Beschichten der Faserverstärkung wird eine Viskose eingesetzt, die ein kationisches, hitzehärtbares Harz, insbesondere ein Melamin/Formaldehyd-Harz, enthält. Mit dem Harz läßt sich die Bräthaftung des Cellulose-Faserdarms einstellen. Es findet sich keine Anregung, die Faserverstärkung vor dem Beschichten zu imprägnieren.

In den Cellulose-Faserclärmen gemäß der EP 0 878 133 sind ebenfalls Vliese gegenüber Geweben als Faserverstärkung bevorzugt, Die zum Beschichten der Faserverstärkung eingesetzte Viskoselösung enthält ein kationisches Harz, mit dem sich die Bräthaftung des Faserdarms einstellen läßt, und zusätzlich noch ein Protein. Es ist nicht erwähnt, daß die Faserverstärkung vor dem Beschichten mit der modifizieren Viskose imprägniert werden könnte oder sollte.

Aus der DE-A 38 26 616 ist eine schlauchförmige Verpackungshülle bekannt, die aus einem beidseitig mit Cellulose beschichteten Textilmaterial besteht. Sie wird nach dem Viskoseverfahren hergestellt. Diese Hülle weist jedoch störende Flecke auf, die nicht transparent sind. Aufgrund der mangelhaften Optik und Transparenz hat das Produkt keine Marktreife verlangt.

Es bestand daher die Ausgabe, eine Nahrungsmittiplhülle mit einem beschichteten textilen Trägermaterial zu eniwickeln, die die geschilderten Nachteile nicht mehr oder in sehr viel geringerem Maße aufweist. Insbesondere soll sie möglichst ebenso transparent sein wie ein Cellulose-Faserdarm, gleichzeitig jedoch die von den Textildärmen bekannte und geschätzte Oberflächenstruktur aufweisen. Die Oberflächenstruktur soll sich je nach Anforderung von matt bis glänzend einstellen lassen. Die Barriereeigenschaften der Hülle, d.h. ihre Durchlässigkeit für Wasserdampf. Sauerstoff und Rauchbestandteile, sollen denen eines Cettutose-Faserdams möglichst nahe kommen. Gleichzeitig soll die Hülle fettdicht sein. Die Hülle soll schließlich gegenüber einem Cellulose-Faserdarm mit gleichem Flächengewicht mechanisch stabiler sein, speziell eine höhere Naßreißfestigkeit aufweisen,

Gefunden wurde, daß Viskose in die Fasern eindringen kann, so daß das textile Trägermaterial in der mit regenerierter Cellulose beschichteten Hülle nahezu unsichtbar ist und die Hülle nach dem Füllen mit Wurstbrät durchgehend transparent und fleckenfrei erscheint.

Gelöst wurden die genannten Aufgaben mit einer Nahrungsmittelhülle, die ein imprägniertes textiles Trägermaterial aufweist, das mit einer Schicht aus regenerierter oder gefällter Cellulose überzogen wurde, wobei das zum Imprägnieren verwendete Mittel die Zwischenräume zwischen den Fasern nicht vollständig ausfüllt

Gegenstand der vorliegenden Erfindung ist demgemäß eine Nahrungsmittelhülle mit einem flächenförmigen textilen Trägermaterial, dadurch gekennzeichnet, daß das textile Trägermaterial die Form eines Gewebes, Gestrickes, Geleges, verfestigten Vlieses oder Spinnvlieses hat und mit Melamin/Formaldehyd-Harz, hydroxypropylierten Stärkeethem, Copolymeren mit Einheiten aus Vinylacetat, Acrylat-Harzen, Polyamin-Polyamid-Epichlorhydrin-Harzen oder verdünnter Viskose imprägniert ist, wobei das zum Imprägnieren verwendete Mittel die Zwischenräume zwischen den Fasern nicht vollständig ausfüllt, und daß es auf der Außenseite oder auf der Innen- und Außenseite mit einer durchgehenden Schicht aus regenerierter oder gefällter Cellulose beschichtet ist.

Bevorzugt ist die Nahrungsmittelhülle schlauchförmig, besonders bevorzugt zudem nahtlos. Als "nahtlos" wird eine Hülle bezeichnet, deren Naht kaum erkennbar ist. Die beim Formen des Schlauches aus dem textilen Trägermaterial durch Übereinanderlegen der Längskanten entstehende Verdickung ist mit einer durchgehenden cellulosischen Beschichtung überzogen; deshalb wirkt das fertige Produkt nahtlos.

Soweit das textile Trägermaterial mit Schlichtemitteln vorbehandelt ist, die das Eindringen der Viskose beeinträchtigen, muß es vorher entschlichtet werden. Als störend haben sich auch Schlichtemittel erwiesen, die sich in wäßrigen Fäll- oder Waschbädern lösen und sich damit in diesen Bädern anreichern. Das sind beispielsweise solche auf Basis von Stärke oder modifizierter Stärke, Mischungen von wasserlöslicher Stärke und Polyvinylalkohol, daneben auch lubrifizierende Mittel und Lipide. Es wird angenommen, daß die wesentliche Ursache für die in der Nahrungsmittelhülle gemäß der DE-A 38 26 616 aufgetretenen Flecke ebenfalls Schlichtemittel sind. Störende Schlichtemittel oder auch störende Konservierungsmittel lassen sich beispielsweise durch Waschen oder enzymatische Behandlung entfernen. Nach dem Entfernen der Schlichtemittel zeigt das textile Trägermaterial häufig eine verminderte mechanische Stabilität, d.h. es läßt sich nicht mehr so leicht zu einem Schlauch formen. Durch eine Imprägnierung des Trägermaterials läßt sich die geforderte mechanische Stabilität wieder erreichen.

In einer bevorzugten Ausführungsform ist das textile Trägermaterial so beschaffen, daß es Viskose oder in wasserhaltigem Aminoxid gelöste Cellulose aufnehmen kann. Geeignete Materialien sind Naturfasern, insbesondere solche, die eine der Cellulose ähnliche oder nahe kommende chemische Konstitution aufweisen, wie Baumwolle, Leinen oder Zellwolle. Unter dem Begriff "Naturfasern" sollen im Zusammenhang mit der vorliegenden Erfindung auch Fasern tierischen Ursprungs, wie Wolle und Seide, verstanden werden. Die natürlichen Fasern können zudem mit synthetischen Fasern gemischt sein.

In einer weiteren Ausführungsform werden textile Trägermaterialien aus synthetischen Fasern eingesetzt. Die synthetischen Fasern sind beispielsweise aus Polyester, Polyamid, Polyacrylnitril, Polyolefin (speziell Polypropylen), Polyvinylacetat oder Polyvinylchlorid hergestellt. Trägermaterialien aus synthetischen Fasern sind vorzugsweise mit chemischen und/oder physikalischen Mitteln so vorbehandelt, daß die Haftung der Viskose oder Aminoxid/Cellulose verbessert ist. Ein wesentlicher Zweck der Vorbehandlung besteht darin sicherzustellen, daß sich der Brechungsindex innerhalb der erfindungsgemäßen Hülle nicht sprunghaft ändert. Nur dann wird eine genügende Transparenz der Hülle nach dem Füllen erreicht.

Das textile Trägermaterial ist flächenförmig und hat die Form eines Gewebes, Gestrickes, Geleges, verfestigten Vlieses oder Spinnvlieses. Auch in den Gelegen oder Vliesen enthält es stets relativ lange Fasern, die um ein Vielfaches länger sind als beispielsweise in einem Hanffaserpapier (dort beträgt die Faserlänge allgemein nicht mehr als 5 mm). Unter "flächenförmig" werden im Zusammenhang mit der vorliegenden Erfindung relativ dünne, jedoch selbsttragende Materialien verstanden, die sich zu einem Schlauch formen lassen. Dicke und Flächengewicht hängen auch von der vorgesehenen Verwendung der Hülle ab. Allgemein beträgt das Flächengewicht 8 bis 300 g/m², bevorzugt 15 bis 200 g/m², besonders bevorzugt 25 bis 120 g/m². Das textile Trägermaterial kann mehr oder weniger dehnbar sein, abhängig von der vorgesehenen Verwendung. Nicht oder nur sehr wenig dehnbare textile Trägermaterialien sind sinnvoll für Hüllen, bei denen es auf eine besonders hohe Kaliberkonstanz ankommt. Besonders bevorzugt sind allgemein dünne, in Längs- und Querrichtung verstreckte Gewebe aus Baumwolle, Baumwolle/Zellwolle-Gemischen oder Zellwolle/Polyester-Gemischen.

Die Oberflächeneigenschaften und die Aufnahme- bzw. Annahmefähigkeit des textilen Trägermaterials können durch chemische und/oder physikalische Vorbehandlung passend eingestellt werden. Chemisch beispielsweise durch Behandeln mit einem Melamin/Formaldehyd-Harz, einem Polyamin-Polyamid-Epichlorhydrin-Harz, einem Acrylat-Harz (besonders einem Emulsionspolymerisat auf Basis von (C₁-C₆)Alkyl(meth)acrylat, speziell auf Basis von Butyl(meth)acrylat). Der Begriff "(Meth)acrytat" steht dabei wie üblich für "Acrylat und/oder Methacrylat". Die Emulsionspolymerisate können zusätzlich Einheiten aus anderen Monomeren enthalten. Dazu zählen beispielsweise Einheiten aus Styrol, α-Methyl-styrol, Maleinsäure-di-*n*-butylester und/oder Vinylacetat. Der Anteil der Einheiten aus solchen anderen Monomeren sollte weniger als 25 Gew.-%, bevorzugt weniger als 15 Gew.-%, betragen. Geeignete Acrylatharze sind dem Fachmann hinlänglich bekannt, beispielsweise aus der DE-A 31 47 519. Als zweckmäßig hat sich erwiesen, Zellwolle mit einem Melamin/Formaldehyd-Harz oder mit einem Polyacrylat zu behandeln. Das textile Trägermaterial kann auch mit einer verdünnten Viskoselösung (die möglichst nicht mehr als 2 Gew.-% Cellulosexanthogenat enthält) behandelt und die Viskose dann zu Cellulose regeneriert werden. Technisch weniger aufwendig ist eine Behandlung mit einer ebenfalls verdünnten Aminoxid/Cellulose-Lösung. Die derivatisierte wie auch die nicht-derivatisierte Cellulose kann gegebenenfalls mit Acrylaten abgemischt sein. Es ist in jedem Fall darauf zu achten, daß die Zwischenräume zwischen den Fasern nicht vollständig ausgefüllt werden, damit die (höher konzentrierte) Viskose bzw. Aminoxid/Cellulose-Lösung während des eigentlichen Beschichtungsvorgangs ungehindert eindringen kann. Das textile Trägermaterial kann von einer oder von beiden Seiten vorbehandelt werden; besonders zweckmäßig wird es einer Foulardierung (Tauchbeschichtung) unterzogen. Dazu werden besonders meist wäßrige Dispersionen eingesetzt, die die entsprechenden organischen Polymere enthalten. Die Vorbehandlung erhöht zudem die mechanische Stabilität des textilen Trägermaterials, so daß es sich leichter zu einem Schlauch formen läßt.

Das textile Trägermaterial kann eingefärbt bzw. bedruckt sein. Auch die bei der chemischen Vorbehandlung eingesetzten Materialien können mit Farbstoffen und/oder Farbpigmenten abgemischt sein. Damit die Transparenz der Hülle erhalten bleibt, sollte besonders in diesem Fall die Beschichtung mit ungefärbter Viskose oder NMMO/Cellulose-Lösung erfolgen.

Anstelle oder zusätzlich zu einer chemischen Vorbehandlung des textilen Trägermaterials kann auch eine physikalische Vorbehandlung durchgeführt werden. Das ist beispielsweise eine Corona-Behandlung, Behandlung mit Plasma, UV-Strahlen, Gamma-Strahlen oder eine thermische Nachbehandlung.

Für eine schlauchförmige Nahrungsmittelhülle wird das gegebenenfalls vorbehandelte textile Trägermaterial in Bahnen passender Breite geschnitten. Diese Bahnen werden jeweils zu einem Schlauch geformt, dessen Längskanten mehr oder weniger stark überlappen. Der jeweils notwendige Überlappungsbereich wird auch durch das Kaliber bestimmt. Allgemein ist er relativ schmal und beträgt 1 bis 6 mm, bevorzugt 2 bis 4 mm. Das zu einem Schlauch geformte textile Trägermaterial wird dann von außen, von innen oder von beiden Seiten mit Viskose oder einer Aminoxid/Cellulose-Lösung beaufschlagt. Damit die Hülle nach dem Füllen transparent wird, muß sich zumindest auf ihrer Außenseite eine Schicht aus regenerierter bzw. gefällter Cellulose befinden. Um die Form des Schlauches aufrecht zu erhalten und um einen zu weitgehenden Schrumpf beim nachfolgenden Trocknen zu vermeiden, hat es sich als zweckmäßig erwiesen, den Schlauch während des Beschichtungsvorgangs mit Stützluft zu beaufschlagen. Durch Regenerieren bzw. Fällen wird die Celluloseschicht gebildet. Wie bereits erwähnt, können der Viskose oder der Aminoxid/Cellulose-Lösung Farbstoffe und/oder Pigmente zudosiert werden. In diesem Falle wird ein ungefärbtes textiles Trägermaterial eingesetzt. Eine Hülle mit einer besseren Transparenz nach dem Füllen wird jedoch durch die Kombination eines gefärbten textilen Trägermaterials mit einem ungefärbten Beschichtungsmedium erreicht.

Das textile Trägermaterial wird mit soviel Viskose oder Aminoxid/Cellulose-Lösung beschichtet, daß nach dem Regenerieren bzw. Fällen und Waschen eine geschlossene Cellulosehydratschicht entsteht. Je nach Art, Dichte und Dicke des textilen Trägermaterials sind dafür etwa 20 bis 250 g Cellulosehydrat, bevorzugt 30 bis 150 g, besonders bevorzugt 40 bis 120 g Cellulosehydrat pro Quadratmeter notwendig (Trockengewicht des Cellulosehydrats). Das Gewicht der erfindungsgemäßen Hülle beträgt damit (im trockenen Zustand) etwa 60 bis 400 g/m², bevorzugt 80 bis 300 g/m², besonders bevorzugt 100 bis 200 g/m². Zweckmäßig enthält die Hülle zudem noch einen sekundären Weichmacher, in der Regel Glycerin.

Die erfindungsgemäße Nahrungsmittelhülle kann zusätzlich Geschmacks- oder Geruchsstoffe enthalten, insbesondere solche, die auf ein in der Hülle befindliches Nahrungsmittel übertragbar sind. Zu nennen ist hier insbesondere Trocken- oder Flüssigrauch.

Um das rechte Maß an Haftung an dem Nahrungsmittel einzustellen, ist die Hülle bevorzugt auf der dem Nahrungsmittel zugewandten Seite mit einer Imprägnierung versehen, beispielsweise einer Trenn- oder ein Haftimprägnierung. Art und Menge der Imprägnierung richten sich wiederum nach der Art des Lebensmittels.

Soll die Hülle besonders undurchlässig für Sauerstoff und/oder Wasserdampf sein, was beispielsweise für eine Leberwursthülle notwendig ist, so weist sie auf der Innen- und/oder Außenseite noch mindestens eine Barriereschicht auf. Das ist beispielsweise eine PVDC-Schicht. Eine solche Hülle verhindert besonders effektiv ein Austrocknen der Wurst und eine oxidative Verfärbung des Wurstbräts.

Die erfindungsgemäße Hülle hat allgemein einen Wassergehalt von etwa 6 bis 20 Gew.-%, bevorzugt etwa 8 bis 12 Gew.-%. Soll sie ohne weitere Wässerung füllfertig sein, weist sie einen Feuchteanteil von etwa 20 bis 30 Gew.-% auf. Es ist jedoch ebenso gut möglich, eine trockene Hülle zu wässern und anschließend zu füllen.

Die Wasserdampfdurchlässigkeit der erfindungsgemäßen Hülle beträgt allgemein etwa 300 bis 1.500 g/m^{2.}d, bevorzugt etwa 700 bis 1.200 g/m^{2.}d. Die Sauerstoffdurchlässigkeit bei 65 % relativer Feuchte anhand eines 5 cm² großen Stücks der Hülle mit einem Wassergehalt von 8 bis 10 Gew.-% und einem Weichmachergehalt von etwa 15 Gew.-%, beträgt allgemein etwa 20 bis 100 cm³/m².d. Die Wasserdurchlässigkeit beträgt schließlich etwa 70 bis 200 l/M² d, bevorzugt etwa 80 bis 120 l/m²·d, gemessen jeweils bei 40 bar Innendruck.

Die Hülle ist im Normalfall rauchdurchlässig. Weist sie jedoch zusätzliche Barriereschichten auf, dann ist sie in der Regel undurchlässig für Kalt- oder Heißrauch. Das Dehnverhalten der erfindungsgemäßen Hülle wird wesentlich durch die Art und Stärke des textilen Trägermaterials wie auch durch das Gewicht der Cellulosehydratschicht und etwa vorhandenen weiteren Schichten bestimmt. Sie kann variieren zwischen 0,1 und 25 %, bevorzugt zwischen 1 und 10 %.

Verfahren und Vorrichtungen zur Herstellung der erfindungsgemäßen Hülle sind dem Fachmann prinzipiell bekannt. Dazu wird zunächst ein flächenförmiges textiles Trägermaterial bereitgestellt. Schlichtemittel werden gegebenenfalls aus dem Trägermaterial entfernt. Falls erforderlich oder gewünscht, kann das Trägermaterial mit einem Imprägnierungsmittel behandelt werden, das dessen Oberflächeneigenschaften modifiziert und/oder dessen mechanische Festigkeit verbessert. Falls ein nahtloses Produkt hergestellt werden soll, wird das Trägermaterial zu einem Schlauch geformt. Das schlauchförmige oder flache Trägermaterial wird dann von einer oder beiden Seiten mit einer durchgehenden Schicht aus Viskose oder einer Aminoxid/Cellulose-Lösung beaufschlagt. Das kann beispielsweise durch Rakelantrag, Walzenantrag, Antragen mit Hilfe einer Ringdüse oder Breitschlitzdüse oder mit Hilfe anderer Beschichtungsvorrichtungen erfolgen, die dem Fachmann prinzipiell geläufig sind. Nachfolgend wird die Cellulose aus der Viskose in einem sauren Fällbad koaguliert und regeneriert. Alternativ wird die Cellulose aus der Aminoxid/Cellulose in einem Bad aus einem verdünnten wäßrigen Aminoxid gefällt. In beiden Ausführungsformen wird das Material dann gewaschen und getrocknet, gegebenenfalls auch weiter konfektioniert.

Die Hülle läßt sich in Form einer flachen Bahn oder gleich als Schlauch herstellen. Der Schlauch kann anschließend in Längsrichtung aufgeschnitten und gegebenenfalls in 2 oder mehr entsprechend schmalere Bahnen geteilt werden. Diese können dann wiederum zu Schläuchen mit kleinerem Kaliber geformt werden, wobei die Längskanten durch Kleben, Siegeln, Nähen oder auf eine andere, dem Fachmann geläufige Art, dauerhaft miteinander verbunden werden. Durch passendes Zurechtschneiden oder Verbinden der Längskanten lassen sich auch schlauchförmige Hüllen mit wechselndem Durchmesser oder unregelmäßigen Konturen herstellen. Auf diese Weise lassen sich die Formen eines Naturdarms imitieren.

Nach dem Beschichten wird die Cellulose wie beschrieben regeneriert bzw. gefällt. Die Hülle in Flachform kann in nachfolgenden Schritten imprägniert, mit einer weiteren Beschichtung (beispielsweise einer Barriereschicht) versehen und/oder bedruckt werden. Soweit erforderlich, wird die erfindungsgemäße Hülle in Flachform in Bahnen passender Breite geschnitten. Die einzelnen Bahnen werden dann in eine Schlauchform gebracht und die überlappenden Längskanten fixiert, beispielsweise durch Kleben, Siegeln, Verschweißen oder Nähen. Zur Herstellung einer Klebenaht lassen sich beispielsweise Hotmelts oder Reaktionskleber, z. B. Polyurethan- oder Ethylen/Vinylacetat-Kleber, einsetzen.

Die erfindungsgemäße schlauchförmige Nahrungsmittelhülle mit oder ohne Naht läßt sich problemlos mit üblichen Füllmaschinen mit pastösen Nahrungsmitteln, wie Wurstbrät, füllen. Bei der Verwendung als Wursthülle wird sie zweckmäßig in geraffter Form (als sogenannte Raffraupe) auf das Füllrohr aufgesetzt. Es können auch einseitig verschlossene Abschnitte gefüllt werden. Der Endverschluß kann dabei durch einen Metall- oder Kunststoff-Clip (der auch mit einer Schlaufe zum Aufhängen der Wurst verbunden sein kann), durch Abbinden mit Garn, durch Verknoten, Verkleben, Siegeln (wobei in der Regel eine Flachnaht ausgebildet wird, die gerade, schräg, wellenförmig oder unregelmäßig geformt sein kann) oder Abnähen erzeugt werden. Es können auch mehrere der genannten Verschlußarten kombiniert werden. Die Abschnitte werden einzeln auf das Füllrohr geschoben, mit dem pastösen Nahrungsmittel, insbesondere mit Wurstbrät, gefüllt und verschlossen. Die Weiterverarbeitung kann dann wie üblich durch Brühen, Kochen oder Räuchern erfolgen.

Die erfindungsgemäße schlauchförmige Hülle läßt sich mit besonderem Vorteil als künstliche Wursthülle verwenden und zwar sowohl für Rohwurst (wie luftgetrocknete oder schimmelgereifte Salami) als auch für Brüh- oder Kochwurst. Die erfindungsgemäße Hülle läßt sich ferner zum Verpacken von Käse verwenden.

Falls gewünscht, kann die erfindungsgemäße schlauchförmige Nahrungsmittelhülle mit einem Netz umhüllt werden, das beispielsweise wabenförmige, 8-eckige, quadratische oder rechteckige Strukturen umfaßt. Das Netz ist gegebenenfalls auch elastisch.

Die folgenden Beispiele sollen die Erfindung illustrieren. Prozente sind darin Gewichtsprozente, soweit nicht anders angegeben oder aus dem Zusammenhang ersichtlich.

### Beispiel 1

Ein Gewebe aus 100 % Zellwolle mit einem Gewicht von 58 g/m², das wasserlösliche Stärke (CMS-Typ) als Schlichtemittel enthielt, wurde enzymatisch entschlichtet, mit einer wäßrigen Butylacrylat-Polymer-Dispersion foulardiert und in Bahnen mit einer Breite von 302 mm geschnitten. Die Bahnen wurden über eine Formschulter zu einem Schlauch geformt, der dann von außen mit ungefärbter Viskose beschichtet wurde. Nach dem Koagulieren und Regenerieren der Cellulose aus der Viskose und dem nachfolgenden Waschen und Trocknen wurde eine Hülle mit einem Gewicht von 136 g/m² erhalten. Die Hülle wurde in einzelne Abschnitte zerteilt, die jeweils an einem Ende abgebunden waren. Die Abschnitte wurden dann mit Salami-Brät gefüllt und mit einem Clip verschlossen. Nach einer Reifezeit von 12 Tagen war die textile Struktur der Hülle noch deutlich erkennbar, die Hülle war jedoch so transparent, daß das Brät gut sichtbar war. Die Oberfläche der Hülle war leicht glänzend.

### Beispiel 2

Ein Mischgewebe aus 80 % Baumwolle und 20 % Polyester mit einem Gewicht von 102 g/m², das Stärke als Schlichtemittel enthielt, wurde enzymatisch entschlichtet, mit einem Melamin/Formaldehyd-Harz foulardiert und mit Hilfe einer Breitschlitzdüse mit Viskose beaufschlagt. Nach der Regenerierung und Trocknung hatte das beschichtete Textil ein Gesamtgewicht von 172 g/m². Die Flachware wurde in Bahnen mit einer Breite von 206 mm geschnitten. Die einzelnen Bahnen wurden zu Schläuchen mit überlappenden Längskanten geformt. Die Längskanten wurden mit einem Hotmelt-Kleber fixiert. Die auf diese Weise hergestellten schlauchförmigen Hüllen mit Naht wurden mit Rohwurstbrät gefüllt. Sie hatten ein Füllkaliber von 67 mm. Erhalten wurden Würste mit einer textilen Oberflächenstruktur, die zudem transparent waren. Nach einer Reife- und Räucherzeit von 21 Tagen zeigten die Hüllen einen geringen Glanz, ohne dabei an Transparenz verloren zu haben.

### Beispiel 3

Ein Gewebe aus 100 % Baumwolle mit einem Flächengewicht von 75 g/m² wurde gewaschen, um Schlichtemittel zu entfernen, und anschließend mit einer wäßrigen Butylacrylat-Polymer-Dispersion foulardiert. Das Gewebe wurde anschließend in Bahnen mit einer Breite von 302 mm geschnitten, die dann über eine Formschulter zu einem Schlauch geformt. Der Schlauch wurde von innen und außen mit Viskose, die keine Farbstoffe oder Farbpigmente enthielt, beschichtet. Nach dem Koagulieren und Regenerieren der Cellulose aus der Viskose, dem Waschen und Trocknen wurde eine Nahrungsmittelhülle mit einem Gesamtgewicht von 170 g/m² erhalten. Die nahtlose Hülle wurde in Abschnitte zerteilt, die jeweils an einem Ende abgebunden wurden. Die Abschnitte wurden dann mit Salami-Brät gefüllt. Nach 14-tägiger Reifedauer der Würste war die textile Struktur der Hülle noch deutlich sichtbar. Gleichzeitig war die Hülle transparent, so daß das Salami-Brät gut sichtbar war. Die Hülle hatte einen relativ hohen Oberflächenglanz.

### Beispiel 4

Ein Gewebe aus 100 % Zellwolle mit einem Gewicht von 65 g/m², das wasserlösliche Stärke (CMS-Typ) als Schlichtemittel enthielt, wurde enzymatisch entschlichtet, mit einer wäßrigen Butylacrylat-Polymer-Dispersion foulardiert und in Bahnen mit einer Breite von 198 mm geschnitten. Die Bahnen wurden über eine Formschulter zu einem Schlauch geformt, der dann von außen mit Viskose, die keine Farbstoffe oder Farbpigmente enthielt, beschichtet wurde. Nach dem Koagulieren und Regenerieren der Cellulose aus der Viskose wurde der Schlauch mit einer Haftimprägnierung ausgerüstet. Er hatte ein Gesamtgewicht von 131 g/m². Dann wurde er der Länge nach in drei Streifen von je 66 mm Breite aufgeschnitten. Diese Streifen wurden an den Längskanten vernäht und somit zu einer optisch aufgewerteten Hülle verarbeitet. Die Dreinahthülle wurde auf eine Länge von 95 cm zugeschnitten, auf einer Seite abgebunden, mit Rohwurstbrät gefüllt und mit einem Clip verschlossen. Nach einer Reifezeit von 12 Tagen war die Oberfläche transparent und leicht glänzend.

## Patentansprüche

1. Nahrungsmittelhülle mit einem flächenförmigen textilen Trägermaterial, das die Form eines Gewebes, Gestrickes, Geleges, verfestigten Vlieses oder Spinnvlieses hat, das mit Melamin/Formaldehyd-Harz, hydroxypropytierten Stärkeethem. Copolymeren mit Einheiten aus Vinylacetat, Acryiat-Harzen, Polyamin-Polyamid-Epichlorhydrin-Harzen oder verdünnter Viskose imprägniert ist, und das auf der Außenseite oder auf der Innen- und Außenseite mit einer durchgehenden Schicht aus regenerierter oder gefällter Cellulose beschichtet ist, **dadurch gekennzeichnet, daß** das zum Imprägnieren verwendete Mittel die Zwischenräume zwischen den Fasern nicht vollständig ausfüllt.

2. Nahrurlgsmittelhülle gemäß Anspruch 1, **dadurch gekennzeichnet, daß** sie schlauchförmig ist, bevorzugt nahtlos.

3. Nahrungsmittelhülle gemäß Anspruch 1 oder 2, **dadurch gekennzeichnet, daß** das textile Trägermaterial natürliche Fasern, bevorzugt Baumwolle, Leinen, Zellwolle, Wolle und/oder Seide, und/oder synthetische Fasern, bevorzugt Fasern aus Polyester, Polyamid, Polyolefin, Polyvinylacetat, Polyacrylnitril, Polyvinylchlorid, oder aus entsprechenden Copolymeren, umfaßt.

4. Nahrungsmittelhülle gemäß einem oder mehreren der Ansprüche 1 bis 3,
**dadurch gekennzeichnet, daß** das textile Trägermaterial ein Gewicht von 8 bis 300 g/m²*,* bevorzugt von 15 bis 200 g/m²*,* besonders bevorzugt von 25 bis 120 g/m², aufweist,

5. Nahrungsmittelhülle gemäß einem oder mehreren der Ansprüche 1 bis 4, **dadurch gekennzeichnet, daß** ihr Gesamtgewicht im trockenen Zustand etwa 60 bis 400 g/m². bevorzugt 80 bis 300 g/m², besonders bevorzugt 100 bis 200 g/m² beträgt.

6. Nahrungsmittelhülle gemäß einem oder mehreren der Ansprüche 1 bis 5,
**dadurch gekennzeichnet, daß** die Oberflächeneigenschaften und die Aufnahmefähigkeit des textilen Trägermaterials durch eine chemische und/oder physikalische Vorbehandlung modifiziert sind,

7. Nahrungsmittelhülle gemäß Anspruch 6, **dadurch gekennzeichnet, daß** die Copolymere mit Einheiten aus Vinylacetat Vinylacetat/Maleinsäure-di-n-butylester-Copolymere sind oder die Acrylatharze Emulsionspolymerisaten mit Einheiten aus (C₁-C₆)Alkyl-(meth)acrylaten sind.

8. Nahrungsmittelhülle gemäß einem oder mehreren der Ansprüche 1 bis 7,
**dadurch gekennzeichnet, daß** das textile Trägermaterial mit Farbstoffen und/oder Farbpigmenten eingefärbt ist.

9. Nahrungsmittelhülle gemäß Anspruch 8, **dadurch gekennzeichnet, daß** das gefärbte Trägermaterial mit einem Beschichtungsmedium ohne Farbstoffe oder Farbpigmente kombiniert ist.

10. Nahrungsmittelhülle gemäß einem oder mehreren der Anspruche 1 bis 7, **dadurch gekennzeichnet, daß** das textile Trägermaterial ungefärbt ist und mit einem gefärbten Beschichtungsmedium kombiniert ist.

11. Nahrungsmittelhülle gemäß einem oder mehreren der Ansprüche 1 bis 10, **dadurch gekennzeichnet, daß** sie nach dem Füllen mit einem Lebensmittel, bevorzugt einem fetthaltigen Lebensmittel, soweit transparent ist, daß das in der Hülle befindliche Lebensrpittel sichtbar ist.

12. Nahrungsmittelhülle gemäß einem oder mehreren der Ansprüche 1 bis 11, **dadurch gekennzeichnet, daß** sie auf der Innen- und/oder Außenseite mindestens eine Schicht mit Barriereeigenschaften für Sauerstoff und/ oder Wasserdampf aufweist.

13. Nahrungsmittelhülle gemäß einem oder mehreren der Ansprüche 1 bis 12, **dadurch gekennzeichnet, daß** sie schlauchförmig ist und auf der Innenseite eine Imprägnierung oder Beschichtung aufweist, die die Haftung an dem Nahrungsmittel beeinflußt.

14. Nahrungsmittelhülle gemäß einem oder mehreren der Ansprüche 1 bis 13, **dadurch gekennzeichnet, daß** das beschichtete, textile Trägermaterial in Flachbahnen zugeschnitten ist, die durch Kleben, Nähen, Siegeln etc. zu einem Schlauch geformt werden.

15. Nahrungsmittelhülle gemäß Anspruch 14, **dadurch gekennzeichnet, daß** durch den Zuschnitt der Flachbahnen bzw, das Verbinden der Längskanten Hüllen mit wechselndem Durchmesser oder unregelmäßigen Konturen hergestellt werden,

16. Nahrungsmittelhülle gemäß einem oder mehreren der Ansprüche 1 bis 15, **dadurch gekennzeichnet, daß** das beschichtete, textile Trägermaterial als Schlauch vorliegt, der zur Verbesserung der Optik zusätzlich abgenäht wird.

17. Nahrungsmittelhülle gemäß einem oder mehreren der Ansprüche 1 bis 16, **dadurch gekennzeichnet, daß** sie mit einem Netz umhüllt ist, das wabenförmige, 8-eckige, quadratische oder rechteckige Strukturen umfaßt und gegebenenfalls elastisch ist.

18. Nahrungsmittelhülle gemäß einem oder mehreren der Ansprüche 1 bis 17, **dadurch gekennzeichnet, daß** sie zu Abschnitten, Abbindungen oder Raupen konfektioniert ist.

19. Verfahren zur Herstellung einer Nahrungsmittelhülle gemäß einem oder mehreren der Ansprüche 1 bis 18, **dadurch gekennzeichnet, daß** es die folgenden Schritte in der angegebenen Reihenfolge umfaßt;
a) Bereitstellen eines flächenförmigen textilen Trägermaterials, das die Form eines Gewebes, Gestrickes, Geleges, verfestigten Vlieses oder Spinnvlieses hat;
b) gegebenenfalls Entfernen eines Schlichtemittels;
c) Behandeln des textilen Trägermaterials mit einem Imprägnierungsmittel, bei dem es sich um ein Melamin/Formaldehyd-Harz, einen hydroxypropylierten Stärkeether, ein Copolymer mit Einheiten aus Vinylacetat, ein Acrylat-Harz, ein Polyamin-Polyamid-Epichlorhydrinharz oder verdünnte Viskose handelt, um dessen Oberflächeneigenschaften, dessen Aufnahmefähigkeit und/oder dessen mechanische Festigkeit einzustellen;
d) gegebenenfalls Formen des textilen Trägermaterials zu einem Schlauch;
e) vollflächiges Beaufschlagen einer oder beider Seiten des textilen Trägermaterials mit Viskose oder Aminoxid/Cellulose-Lösung;
f) Koagulieren und Regenerieren der Cellulose aus der Viskose oder Fällen der Cellulose aus der Aminoxid/Cettutose-Lösung, so daß sich eine Cellulosehyclrat-Schicht auf dem textilen Trägermaterial ausbildet;
g) Waschen des beschichteten textilen Trägermaterials,
h) gegebenenfalls Behandeln der Nahrungsmiittelhülle mit einem sekundären Weichmacher
i) und gegebenenfalls Imprägnieren mit einer Haft- und/oder Trennpräparation;
j) Trocknen des beschichteten textilen Trägermaterials und
k) gegebenenfalls Konfektionieren der Nahrungsmittelhülle.

20. Verwendung der Nahrungsmittelhülle gemäß einem oder mehreren der Ansprüche 1 bis 18 als künstliche Wursthülle, bevorzugt für Roh-, Brüh- oder Kochwurst, oder als Umhüllung für Käse.

## Claims

1. A food casing having a flat textile backing material which has the form of a woven fabric, knitted fabric, laid fabric, consolidated nonwoven or spun bonded nonwoven, which is impregnated with melamine/formaldehyde resin, hydroxypropylated starch ethers, copolymers having units of vinyl acetate, acrylic resins, polyamine-polyamide-epichlorohydrin resins, or dilute viscose, and which is coated on the outside or on the inside and outside with a continuous layer of regenerated or precipitated cellulose, wherein the agent used for impregnation does not completely fill the interstices between the fibers.

2. The food casing as claimed in claim 1, wherein it is tubular, preferably seamless.

3. The food casing as claimed in claim 1 or 2, wherein the textile backing material comprises natural fibers, preferably cotton, linen, viscose staple, wool and/or silk, and/or synthetic fibers, preferably fibers of polyester, polyamide, polyolefin, polyvinyl acetate, polyacrylonitrile, polyvinyl chloride, or corresponding copolymers.

4. The food casing as claimed in one or more of claims 1 to 3, wherein the textile backing material has a weight of 8 to 300 g/m², preferably 15 to 200 g/m², particularly preferably 25 to 120 g/m².

5. The food casing as claimed in one or more of claims 1 to 4, wherein its total weight in the dry state is about 60 to 400 g/m², preferably 80 to 300 g/m², particularly preferably 100 to 200 g/m².

6. The food casing as claimed in one or more of claims 1 to 5, wherein the surface properties and the uptake ability of the textile backing material are modified by a chemical and/or physical pretreatment.

7. The food casing as claimed in claim 6, wherein the copolymers having units of vinyl acetate are vinyl acetate/maleic acid di-n-butyl ester copolymers or the acrylic resins are emulsion polymers having units of (C₁-C₆) alkyl (meth) acrylates.

8. The food casing as claimed in one or more of claims 1 to 7, wherein the textile backing material is colored with dyes and/or coloring pigments.

9. The food casing as claimed in claim 8, wherein the colored backing material is combined with a coating medium without dyes or coloring pigments.

10. The food casing as claimed in one or more of claims 1 to 7, wherein the textile backing material is uncolored and is combined with a colored coating medium.

11. The food casing as claimed in one or more of claims 1 to 10, wherein, after it is stuffed with a food, preferably a fatty food, it is transparent to the extent that the food situated in the casing is visible.

12. The food casing as claimed in one or more of claims 1 to 11, wherein, on the inside and/or outside, it has at least one layer having barrier properties for oxygen and/or water vapor.

13. The food casing as claimed in one or more of claims 1 to 12, wherein it is tubular and, on the inside, has an impregnation or coating which influences the adhesion to the food.

14. The food casing as claimed in one or more of claims 1 to 13, wherein the coated textile backing material is sliced into flat webs which are shaped to form a tube by gluing, stitching, sealing etc.

15. The food casing as claimed in claim 14, wherein by means of the cut of the flat webs or the bonding of the longitudinal edges, casings having variable diameter or irregular contours are produced.

16. The food casing as claimed in one or more of claims 1 to 15, wherein the coated textile backing material is present as a tube which is additionally stitched to improve the optical appearance.

17. The food casing as claimed in one or more of claims 1 to 16, wherein it is coated with a net which comprises honeycomb-shaped, octagonal, square or rectangular structures, and if appropriate is elastic.

18. The food casing as claimed in one or more of claims 1 to 17, wherein it is end-processed to form sections, tied-off sections or shirred sticks.

19. A process for producing a food casing as claimed in one or more of claims 1 to 18, which comprises the following steps in the sequence given:
a) providing a flat textile backing material which has the form of a woven fabric, knitted fabric, laid fabric, consolidated nonwoven or spun bonded nonwoven;
b) optionally removing a sizing agent;
c) treating the textile backing material with an impregnating agent which is a melamine/ formaldehyde resin, a hydroxypropylated starch ether, a copolymer having units of vinyl acetate, an acrylic resin, a polyamine-polyamide-epichlorohydrin resin, or dilute viscose, in order to set its surface properties, its uptake capacity and/or its mechanical strength;
d) optionally shaping the textile backing material to form a tube;
e) charging the whole surface of one or both sides of the textile backing material with viscose or amine oxide/cellulose solution;
f) coagulating and regenerating the cellulose from the viscose or precipitating the cellulose from the amine oxide/cellulose solution, in such a manner that a cellulose hydrate layer is formed on the textile backing material;
g) washing the coated textile backing material,
h) optionally treating the food casing with a secondary plasticizer
i) and if appropriate impregnation with an adhesive and/or release preparation;
j) drying the coated textile backing material and
k) optionally end-processing the food casing.

20. The use of the food casing as claimed in one or more of claims 1 to 18 as artificial sausage casing, preferably for raw sausage, scalded-emulsion sausage or cooked-meat sausage, or as packaging for cheese.

## Revendications

1. Enveloppe pour produits alimentaires avec un matériau support textile de forme plate, qui a la forme d'un tissu, d'un tricot, d'un stratifié, d'un non tissé consolidé ou d'un non tissé filé/lié, qui est imprégné de résine de mélamine/formaldéhyde, d'éthers d'amidon hydroxypropylés, de copolymères ayant des unités d'acétate de vinyle, de résines acrylates, de résine de polyamine-polyamide-épichlorhydrine ou de viscose diluée, et qui est revêtue sur la face externe ou sur la face interne et la face externe d'une couche continue de cellulose régénérée ou précipitée, **caractérisée en ce que** l'agent utilisé pour l'imprégnation ne remplit pas complètement les espaces intermédiaires entre les fibres.

2. Enveloppe pour produits alimentaires selon la revendication 1, **caractérisée en ce qu'**elle se présente sous une forme tubulaire, de préférence sans couture.

3. Enveloppe pour produits alimentaires selon la revendication 1 ou 2, **caractérisée en ce que** le matériau support textile comprend des fibres naturelles, de préférence du coton, du lin, de la fibranne, de la laine et/ou de la soie, et/ou des fibres synthétiques, de préférence des fibres de polyester, de polyamide, de polyoléfine, de poly(acétate de vinyle), de polyacrylonitrile, de poly(chlorure de vinyle) ou de copolymères correspondants.

4. Enveloppe pour produits alimentaires selon une ou plusieurs des revendications 1 à 3, **caractérisée en ce que** le matériau support textile présente un poids de 8 à 300 g/m², de préférence de 15 à 200 g/m², tout particulièrement de 25 à 120 g/m².

5. Enveloppe pour produits alimentaires selon une ou plusieurs des revendications 1 à 4, **caractérisée en ce que** son poids total à l'état sec est d'environ 60 à 400 g/m², de préférence de 80 à 300 g/m², tout particulièrement de 100 à 200 g/m².

6. Enveloppe pour produits alimentaires selon une ou plusieurs des revendications 1 à 5, **caractérisée en ce que** les propriétés de surface et la capacité d'absorption du matériau support textile sont modifiées par un prétraitement chimique et/ou physique.

7. Enveloppe pour produits alimentaires selon la revendication 6, **caractérisée en ce que** les copolymères pourvus d'unités d'acétate de vinyle sont des copolymères d'acétate de vinyle et des di-n-butylesters d'acide maléique ou les résines acrylates sont des polymères en émulsion avec des unités de (méth)acrylates d'alkyle en (C₁-C₈) .

8. Enveloppe pour produits alimentaires selon une ou plusieurs des revendications 1 à 7, **caractérisée en ce que** le matériau support textile est coloré avec des colorants et/ou des pigments de couleur.

9. Enveloppe pour produits alimentaires selon la revendication 8, **caractérisée en ce que** le matériau support coloré est combiné à un agent de revêtement sans colorant ni pigment de couleur.

10. Enveloppe pour produits alimentaires selon une ou plusieurs des revendications 1 à 7, **caractérisée en ce que** le matériau support textile n'est pas coloré et est combiné à un agent de revêtement coloré.

11. Enveloppe pour produits alimentaires selon une ou plusieurs des revendications 1 à 10, **caractérisée en ce que**, après remplissage avec un produit alimentaire, de préférence un produit alimentaire contenant des graisses, elle est assez transparente pour que le produit alimentaire se trouvant dans l'enveloppe soit visible.

12. Enveloppe pour produits alimentaires selon une ou plusieurs des revendications 1 à 11, **caractérisée en ce qu'**elle présente sur la face interne et/ou sur la face externe au moins une couche ayant des propriétés barrière pour l'oxygène et/ou la vapeur d'eau.

13. Enveloppe pour produits alimentaires selon une ou plusieurs des revendications 1 à 12, **caractérisée en ce qu'**elle a une forme de tube et présente sur la face interne une imprégnation ou un revêtement, qui influence l'adhérence au produit alimentaire.

14. Enveloppe pour produits alimentaires selon une ou plusieurs des revendications 1 à 13, **caractérisée en ce que** le matériau support textile revêtu est découpé en bandes plates, qui sont conformées en tube par collage, agrafage, scellage, etc.

15. Enveloppe pour produits alimentaires selon la revendication 14, **caractérisée en ce que** des enveloppes de diamètre alterné ou de contours irréguliers sont fabriquées par découpe des bandes plates ou liaison des arêtes longitudinales.

16. Enveloppe pour produits alimentaires selon une ou plusieurs des revendications 1 à 15, **caractérisée en ce que** le matériau support textile revêtu se présente sous la forme d'un tube, qui est en plus cousu pour améliorer l'optique.

17. Enveloppe pour produits alimentaires selon une ou plusieurs des revendications 1 à 16, **caractérisée en ce qu'**elle est enveloppée dans un filet, qui comprend des structures en nid d'abeille, octogonales, carrées ou rectangles et est éventuellement élastique.

18. Enveloppe pour produits alimentaires selon une ou plusieurs des revendications 1 à 17, **caractérisée en ce qu'**elle est façonnée en sections, en ensembles ou en chenilles.

19. Procédé de fabrication d'une enveloppe pour produits alimentaires selon une ou plusieurs des revendications 1 à 18, **caractérisé en ce qu'**il comprend les étapes suivantes dans l'ordre indiqué :
a) préparation d'un matériau support textile de forme plate, qui se présente sous la forme d'un tissu, d'un tricot, d'un stratifié, d'un non tissé consolidé ou d'un non tissé filé lié ;
b) éventuellement retrait d'un agent d'encollage ;
c) traitement du matériau support textile avec un agent d'imprégnation, qui est une résine de mélamine/formaldéhyde, un éther d'amidon hydroxypropylé, un copolymère avec des unités d'acétate de vinyle, une résine acrylate, une résine de polyamine-polyamide-épichlorhydrine ou de la viscose diluée pour régler ses propriétés de surface, sa capacité d'absorption et/ou sa résistance mécanique ;
d) éventuellement conformation du matériau support textile en tube ;
e) application sur toute la surface d'une ou des deux faces du matériau support textile de viscose ou d'une solution d'aminoxyde/cellulose ;
f) coagulation et régénération de la cellulose à partir de la viscose ou précipitation de la cellulose à partir de la solution d'aminoxyde/cellulose de sorte que soit formée une couche d'hydrate de cellulose sur le matériau support textile ;
g) lavage du matériau support textile revêtu ;
h) éventuellement traitement de l'enveloppe pour produits alimentaires avec un plastifiant secondaire ; et
i) éventuellement imprégnation avec une préparation d'adhérence et/ou de séparation ;
j) séchage du matériau support textile revêtu, et
k) éventuellement façonnage de l'enveloppe pour produits alimentaires.

20. Utilisation de l'enveloppe pour produits alimentaires selon une ou plusieurs des revendications 1 à 18 comme gaine de saucisse artificielle, de préférence pour saucisses brutes, saucisses blanchies ou saucisses à cuire, ou comme revêtement pour fromages.
